Europäisches Patentamt

European Patent Office

Office européen des brevets

(11) Veröffentlichungsnummer: **0 334 033**
**A1**

## (12) EUROPÄISCHE PATENTANMELDUNG

(21) Anmeldenummer: 89103007.4

(22) Anmeldetag: 21.02.89

(51) Int. Cl.⁴: **B25J 9/18**

(30) Priorität: 22.03.88 DE 3809604

(43) Veröffentlichungstag der Anmeldung:
27.09.89 Patentblatt 89/39

(84) Benannte Vertragsstaaten:
CH DE FR GB IT LI SE

(71) Anmelder: **Siemens Aktiengesellschaft**
**Wittelsbacherplatz 2**
**D-8000 München 2(DE)**

(72) Erfinder: **Roth, Norbert**
**Ahornweg 8**
**D-8191 Eurasburg(DE)**
Erfinder: **Driesbach, Bodo**
**An der Osterleite 21**
**D-8170 Bad Tölz(DE)**

(54) **Positionsregelung für sensorgeführte Portalroboter.**

(57) Für Flächenportale soll eine preiswerte, schnelle und hochgenaue Positionsregelung geschaffen werden, die es ermöglicht den mechanischen Aufbau der Flächenportale ohne Berücksichtigung von thermischen Effekten zu realisieren.

Für die X- und Y-Achse werden nur wenige grobe Markierungen längs der Bahnen vorgesehen, so daß die Robotersteuerung in etwa weiß, in welcher Position sich der Greifer befindet. Die Rasterung muß allerdings genau genug sein, damit sich die Bildfelder der Sensorkamera überlappen.

Sensorgeführte Depalettierroboter.

EP 0 334 033 A1

Positionsregelung für sensorgeführte Portalroboter.

Die Erfindung betrifft eine Positionsregelung nach dem Oberbegriff des Anspruchs 1.

Unter Portalrobotern (Flächenportale) versteht man Industrieroboter (IR), die in ihren Grundachsen aus Linearachsen aufgebaut sind, deren Position über Maßstäbe oder Inkrementalgeber gemessen und geregelt werden.

Bei IR ist es bekannt, den Greifer für Zusatzaufgaben mit einem oder mehreren Sensoren auszurüsten.

Die Positionsgenauigkeit besonders von Flächenportalen ist von der Absolutgenauigkeit her betrachtet nicht optimal. Hier wirken sich besonders thermische Effekte aus, so daß das theoretische Koordinatensystem mit den exakten Positionen des Robotergreifers nicht übereinstimmt. Eine Optimierung dieses Zustandes über die konstruktive Auslegung und das Anbringen geeigneter Wegmeßsysteme ist aber sehr aufwendig und teuer.

Eine Erhöhung der Positionsgenauigkeit von Flächenportalen konnte bisher durch Sensorführung nicht gelöst werden. Es wurde vielmehr durch entsprechenden Aufbau des Portals und geeignete Wegmeßsysteme eine Lösung versucht, wobei aber die Absolutgenauigkeit der Flächenportale immer noch unzufriedenstellend blieb.

Der Erfindung liegt die Aufgabe zugrunde, für Flächenportale eine preiswerte, schnelle und hochgenaue Positionsregelung zu schaffen, die es ermöglicht, den mechanischen Aufbau der Flächenportale ohne Berücksichtigung von thermischen Effekten zu realisieren.

Diese Aufgabe wird gemäß dem Kennzeichen des Patentanspruches gelöst.

Der Vorteil der Erfindung besteht vor allem darin, daß entsprechend erstellte Flächenportale billiger, schneller und genauer für einen breiten Einsatzbereich, speziell für die Bereitstellung halbgeordneter Teile, verfügbar werden. Dies wird mit einer Kopplung Sensor-Robotersteuerung erreicht.

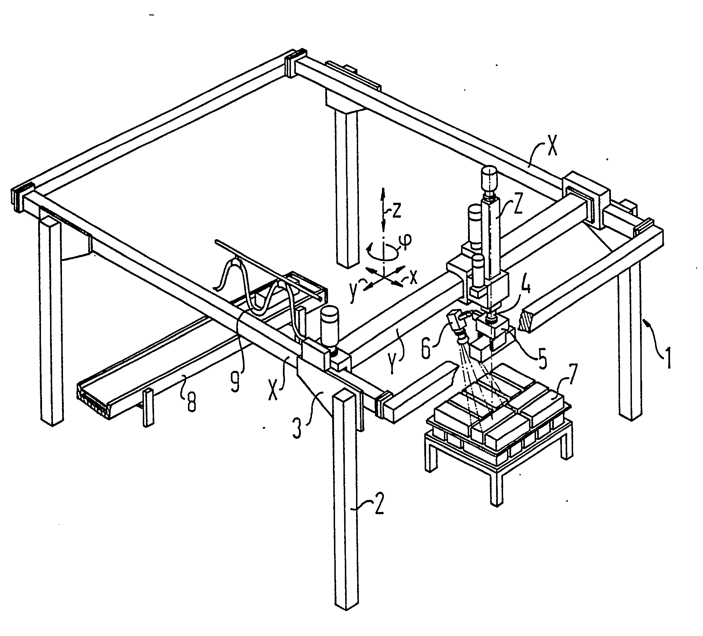

Die Erfindung wird anhand der Figur erläutert, die ein Beispiel eines prinzipiellen Aufbaus eines Portalroboters zeigt. Mit 1 ist der Portalaufbau bestehend aus Ständern 2, X-Achsen und Versteifungen 3 bezeichnet. Auf der Y-Achse wird die Z-Achse bewegt. In der Figur sind an der Z-Achse Handgelenk 4, Greifer 5 und Kamera 6 eines visuellen Sensors befestigt. Mit 7 sind die Teile bezeichnet, die der Roboter beispielsweise handhaben muß. Mit 8 ist eine Fördereinrichtung angedeutet, die aber nicht Gegenstand der Erfindung ist. 9 zeigt eine beispielsweise Kabelführung. Mit den Pfeilen in der Mitte sind die Positionen x, y, z und φ angedeutet.

An der X- und Y-Achse sind nicht dargestellte Markierungen vorgesehen, über die der Roboter grob positioniert werden kann. Die Markierungen sind in Abhängigkeit vom Bildfenster des Sensorsystems ausgelegt, so daß sie sich etwas überlappen.

Die Lösung der Erfindung besteht darin, daß der Greifer des Flächenportals mit einer Fernsehkamera ausgerüstet ist, die die genaue xy- und φ-Position der zu erfassenden Gegenstände vermißt. Um das Flächenportal durch die Doppelausrüstung mit inneren Wegmeßsystemen und externem visuellem Sensor nicht unnötig zu verteuern, ist ein Weg anzustreben, ein preiswerteres Flächenportal zu bauen. Dazu ist es notwendig, das Flächenportal nicht mit inneren, hochgenauen und teueren Wegmeßsystemen auszustatten. Es genügt vielmehr, für die X- und Y-Achse nur wenige grobe Markierungen längs der Bahnen vorzusehen, so daß die Robotersteuerung in etwa weiß, in welcher Position sich der Greifer befindet. Allerdings muß die Rasterung genau genug sein, damit sich die Bildfelder des Sensors überlappen.

Die genauere Positionsbestimmung der einzelnen Objekte im Greifraum wird dann von dem angebauten oder integrierten Sensorsystem erfaßt und die Position des Robotergreifers entsprechend genau nachgeregelt. Auf diese Weise ist die Lageerfassung des Roboters preiswert. Die eigentliche Erfassung der Ist-Lagen der zu greifenden Komponenten wird im wesentlichen von dem Sensor erledigt.

## Ansprüche

Positionsregelung für sensorgeführte Portalroboter, **dadurch gekennzeichnet,** daß zur Positionsregelung an den linearen X- und Y-Achsen längs der Bahnen Markierungen in großem Abstand in Abhängigkeit vom Aufnahmebereich des Sensors (6) vorgesehen sind und daß die genaue Sollposition durch diesen intelligenten Sensor (6) ermittelt und die Feinpositionierung des Roboters (Z) über einen Regelkreis hoher Genauigkeit erreicht wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| Y | GB-A-1566443 (ING. C. OLIVETTI & C.) <br> * Seite 1, Zeile 15 - Zeile 22; Figur 1 * <br> --- | 1 | B25J9/18 |
| Y | US-A-4636137 (Jerome H. Lemelson) <br> * Spalte 19, Zeile 55 - Spalte 20, Zeile 20; Figur 3 * <br> ----- | 1 | |

|  |  |  | RECHERCHIERTE SACHGEBIETE (Int. Cl.4 ) |
|---|---|---|---|
|  |  |  | B25J <br> G05B |

Der vorliegende Recherchenbericht wurde für alle Patentansprüche erstellt

| Recherchenort | Abschlußdatum der Recherche | Prüfer |
|---|---|---|
| DEN HAAG | 29 JUNI 1989 | MOYLE J.F. |